# EUROPEAN PATENT SPECIFICATION

(11) **EP 3 416 507 B1**
(45) Date of publication and mention of the grant of the patent: **22.04.2020**
(21) Application number: 17705481.4
(22) Date of filing: 13.02.2017
(51) Int. Cl.: A24F 47/00, A24D 1/00

(54) **FLAVOUR DELIVERY DEVICE**
AROMAABGABEVORRICHTUNG
DISPOSITIF DE DISTRIBUTION D'ARÔME

(30) Priority: 18.02.2016 GB 201602831
(43) Date of publication of application: 26.12.2018
(73) Proprietor: British American Tobacco (Investments) Ltd, London WC2R 3LA (GB)
(72) Inventor: SPENCER, Alfred Vincent, Dibden Purlieu Hampshire SO45 AJJ (GB)
(74) Representative: D Young & Co LLP
(86) International application number: PCT/GB2017/050375
(87) International publication number: WO 2017/141017

(56) References cited:
- US-A1- 2007 062 548
- US-A1- 2014 299 141
- US-A1- 2015 272 225
- US-A1- 2016 007 648

## Description

### Technical Field

The present invention relates to a flavour delivery device for use with smoking articles including electronic aerosol provision systems and combustible smoking articles.

### Background

Combustible smoking articles such as cigarettes, cigars and cigarillos are often based on the combustion of tobacco, although other plant material may be used, such as herbs. While the basic taste, flavour and scent of the tobacco or plant material may be provided as the overall flavour of the article to be perceived by the consumer during smoking, it is known to add additional flavourants to alter the delivered flavour, for example menthol. Various configurations for incorporating flavourants are known, including flavour released as a vapour into the inhaled airstream by the action of heat when the smoking article is lit for smoking or by the rupture of capsules under pressure of the consumer's hand or mechanical action of tearing a tape.

More recently, the provision of flavours has been carried over from combustible smoking articles into aerosol provision systems such as electronic cigarettes. Electronic cigarettes generally contain a reservoir of a source liquid containing a formulation, typically including nicotine, or a solid, such as a tobacco-based product, from which an aerosol is generated, such as through heat vaporisation or other means. Thus an aerosol source for an aerosol provision system may comprise a heating element coupled to a portion of the source liquid from the reservoir. When a user inhales on the device, the heating element is activated to vaporise a small amount of the source liquid, which is thus converted to an aerosol for inhalation by the user. More particularly, such devices are usually provided with one or more air inlet holes located away from a mouthpiece of the system. When a user sucks on the mouthpiece, air is drawn through the inlet holes and past the aerosol source. There is an air flow path connecting the inlet holes to the aerosol source and on to an opening in the mouthpiece so that air drawn past the aerosol source continues along the flow path to the mouthpiece opening, carrying some of the aerosol from the aerosol source with it. The aerosol-carrying air exits the aerosol provision system through the mouthpiece opening for inhalation by the user. Incorporation of flavourants into such systems is straightforward; a flavourant can be included in the source liquid so that the generated aerosol includes volatile flavour elements vaporised by the heating of the heating element. A wide range of flavours is available, so that in some cases an electronic cigarette may deliver no conventional tobacco taste at all, but rather a taste composed solely of other flavours. Some systems allow the consumer to blend different source liquids together before placing the blend in an electronic cigarette, allowing the flavour to be customised.

In general, however, for both combustible smoking articles and other aerosol provision systems, any flavourant is present in each inhaled puff at a level depending on the proportion of flavourant to tobacco or source liquid, and will be delivered up until it has all been consumed by vaporisation into the inhaled aerosol stream. This may be before the tobacco or source liquid has been consumed. The flavour is present and may then expire, and the consumer has no control over the level and duration of the flavour experienced.

US 2015/272225 describes a smoking article that can provide an inhalable substance and comprises a cartridge with an inhalable substance medium therein, control housing that includes an electrical energy source and an electrical power source, and a heating member that may be located in either the cartridge or the control housing.

Accordingly, approaches that offer some consumer control of flavour delivery are of interest.

### Summary

According to a first aspect of some embodiments described herein, there is provided a flavour delivery device for adding flavour to an aerosol stream generated by a smoking article, the device comprising: an electrical heating element configured for connection to an electrical power source; a support member in or on which the heating element is supported, the support member also supporting electrical contacts configured to connect the heating element to an electrical power source housed in an electronic aerosol provision system or smoking article holder; and a portion of flavourant provider disposed as a layer over a surface of the support member and arranged to receive heat from the heating element, the flavourant provider comprising flavourant material held in a substrate material, the flavourant material able to form a vapour and the substrate material softenable under the application of heat, wherein provision of electrical power to the heating element delivers heat to the flavourant provider to soften at least a part of the substrate material and release at least some of the flavourant material as a vapour.

The smoking article may be a combustible smoking article, such that the flavour delivery device is configured to be provided in a holder for the combustible smoking article, the holder comprising the electrical power source. Alternatively, the smoking article may be an electronic aerosol provision system comprising the electrical power source, and the flavour delivery device is configured to be provided in the electronic aerosol provision system.

The flavour delivery device may further comprise one or more further portions of flavourant provider. One or more portions of flavourant provider may be arranged on each of opposite surfaces of the support member. The flavour delivery device may further comprise one or more further heating elements configured to be individually provided with electrical power. The device may comprise a separate portion of flavourant material arranged to receive heat from each heating element.

The substrate material may comprise a wax material.

The provision of electrical power to the heating element to soften at least a part of the substrate material may comprise providing electrical power to deliver sufficient heat to melt the at least a part of the substrate material.

According to a second aspect of some embodiments described herein, there is provided an electronic aerosol provision system, a component of an electronic aerosol provision system or a smoking article holder comprising a socket for receiving a flavour delivery device according to the first aspect in a position that makes electrical connection with an electrical power source in the electronic aerosol provision system or smoking article holder and from which flavourant material released by the flavour delivery device is able to enter an airflow path for an aerosol stream through the electronic aerosol provision system or smoking article holder.

The socket may be configured to allow a user to remove and replace the flavour delivery device.

The electronic aerosol provision system, component of an electronic aerosol provision system or smoking article holder may comprise an external user-actuable switch operable to open and close connection of the electrical heating element to the electrical power source. Alternatively or additionally the electronic aerosol provision system, component of an electronic aerosol provision system or smoking article holder may comprise a computer processor configured to execute computer code stored in a memory to control the provision of electrical power to the heating element from the electrical power source, and optionally may further comprise a data transceiver configured to receive updated computer code for storage in the memory.

Also, a flavour delivery device according to the first aspect may further comprise a computer processor configured to execute computer code stored in a memory to control the provision of electrical power to the heating element, and a data transceiver configured to receive updated computer code for storage in the memory.

According to a third aspect of some embodiments described herein, there is provided a storage device storing computer code executable by a computer processor and operable to enable a computing device to: display a user interface that prompts a user to enter control parameters relevant to the addition of flavour from a flavour delivery device according to the first aspect to an aerosol stream generated by an electronic aerosol provision system or a smoking article; and transmit data representing the control parameters to a data transceiver in an electronic aerosol provision system, a component of an electronic aerosol provision system, a smoking article holder or a flavour delivery device.

According to a fourth aspect of some embodiments described herein, there is provided a method of adding flavour to an aerosol stream generated by a smoking article, the method comprising: arranging within an electronic aerosol provision system or a smoking article holder a flavour delivery device comprising an electrical heating element, a support member in or on which the heating element is supported, the support member also supporting electrical contacts configured to connect the heating element to an electrical power source housed in the electronic aerosol provision system or smoking article holder, and a portion of flavourant provider arranged to receive heat from the heating element, the flavourant provider comprising flavourant material held in a substrate material, the flavourant material able to form a vapour and the substrate material softenable under the application of heat; providing electrical power to the heating element from an electrical power source in the electronic aerosol provision system or smoking article holder while a user is inhaling through the aerosol provision system or smoking article holder, whereby the provision of electrical power delivers heat to the flavourant provider to soften at least a part of the substrate material and release at least some of the flavourant material as a vapour; and delivering the released vapour into an aerosol stream flowing in an airflow passage through the electronic aerosol provision system or smoking article holder.

The method may further comprise transmitting control parameter data from a computing device to a data transceiver in the electronic aerosol provision system, smoking article holder or flavour delivery device, and controlling the provision of electrical power to the heating element using a computer processor in the electronic aerosol provision system, smoking article holder or flavour delivery device executing computer code in accordance with the control parameter data.

### Brief Description of the Drawings

Various embodiments will now be described in detail by way of example only with reference to the accompanying drawings in which:
Figure 1 shows a schematic representation of an example aerosol provision system in which embodiments of the invention may be implemented;
Figure 2 shows a schematic longitudinal cross-sectional representation of part of an example aerosol provision system incorporating an example flavour delivery device;
Figure 3 shows a plan view of a first example flavour delivery device;
Figures 4, 5 and 6 show cross-sectional side views of second, third and fourth example flavour delivery devices;
Figure 7 shows a plan view of a further example flavour delivery device;
Figure 8 shows a cross-sectional side view of a still further example flavour delivery device;
Figure 9 shows an end view of an example cartridge assembly component of an aerosol provision system housing an example flavour delivery device;
Figure 10 shows an end view of a further example cartridge assembly component of an aerosol provision system housing an example flavour delivery device;
Figure 11 shows a schematic representation of a first example aerosol provision system including a flavour delivery device;
Figure 12 shows a schematic representation of a second example aerosol provision system including a flavour delivery device;
Figure 13 shows a schematic representation of a third example aerosol provision system including a flavour delivery device;
Figure 14 shows a longitudinal cross-sectional view of a first example smoking article holder incorporating a flavour delivery device; and
Figure 15 shows a longitudinal cross-sectional view of a second example smoking article holder incorporating a flavour deliver device.

### Detailed Description

Aspects and features of certain examples and embodiments are discussed/ described herein. Some aspects and features of certain examples and embodiments may be implemented conventionally and these are not discussed/described in detail in the interests of brevity. It will thus be appreciated that aspects and features of apparatus and methods discussed herein which are not described in detail may be implemented in accordance with any conventional techniques for implementing such aspects and features.

Aspects of the present disclosure relate to smoking articles. In the context of the disclosure this term includes both combustible smoking articles (such as cigarettes, cigars, cigarillos and other articles based on the combustion of tobacco or other plant material) and electronic smoking articles such as electronic aerosol provision systems.

Some aspects of the present disclosure relate to (but are not limited to) electronic aerosol provision systems, such as e-cigarettes. Throughout the following description the term "e-cigarette" or "electronic cigarette" may sometimes be used; however, it will be appreciated this term may be used interchangeably with aerosol (vapour) provision system and electronic aerosol (vapour) provision system.

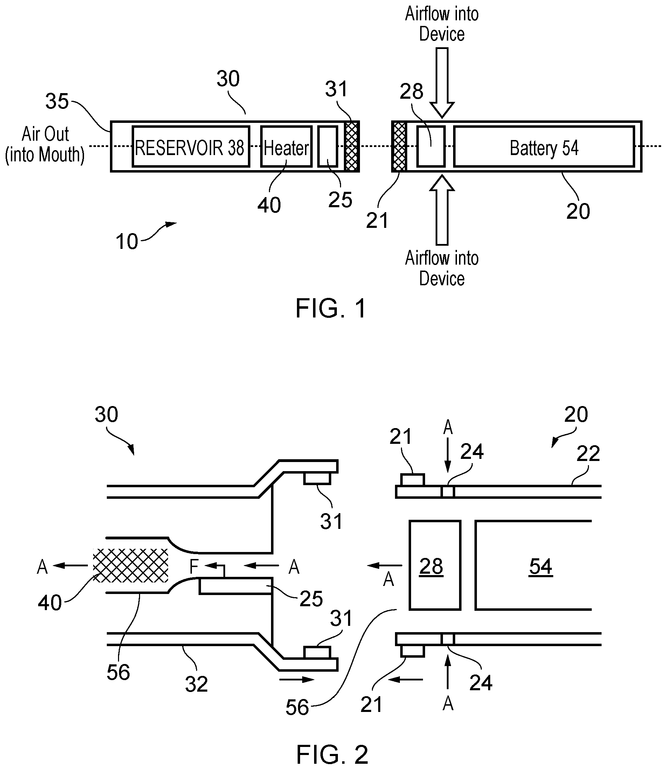

Figure 1 is a highly schematic diagram (not to scale) of an aerosol/vapour provision system such as an e-cigarette 10 to which some embodiments are applicable. The e-cigarette has a generally cylindrical shape, extending along a longitudinal axis indicated by dashed line, and comprises two main components, namely a body 20 and a cartridge assembly 30.

The cartridge assembly 30 includes a reservoir 38 containing a source liquid comprising a liquid formulation from which an aerosol is to be generated, for example containing nicotine, and a heating element or heater 40 for heating source liquid to generate the aerosol. The source liquid and the heater 40 may be collectively referred to as an aerosol source. The cartridge assembly 30 further includes a mouthpiece 35 having an opening through which a user may inhale the aerosol generated by the heater 40. The aerosol for inhalation may be described as an aerosol stream or inhalable airstream. As an example, the source liquid may comprise around 1 to 3% nicotine and 50% glycerol, with the remainder comprising roughly equal measures of water and propylene glycol, and possibly also comprising other components.

The body 20 includes a re-chargeable cell or battery 54 (referred to herein after as a battery) to provide power for the e-cigarette 10, and a printed circuit board (PCB) 28 and/or other electronics for generally controlling the e-cigarette. In use, when the heater 40 receives power from the battery 54, as controlled by the circuit board 28 possibly in response to pressure changes detected by an air pressure sensor (not shown), the heater 40 vaporises source liquid at the heating location to generate the aerosol, and this aerosol stream is then inhaled by a user through the opening in the mouthpiece 35. The aerosol is carried from the aerosol source to the mouthpiece 35 along an air channel (not shown in Figure 1) that connects the aerosol source to the mouthpiece opening as a user inhales on the mouthpiece.

In this particular example, the body 20 and cartridge assembly 30 are detachable from one another by separation in a direction parallel to the longitudinal axis, as shown in Figure 1, but are joined together when the device 10 is in use by cooperating engagement elements 21, 31 (for example, a screw or bayonet fitting) to provide mechanical and electrical connectivity between the body 20 and the cartridge assembly 30. An electrical connector interface on the body 20 used to connect to the cartridge assembly 30 may also serve as an interface for connecting the body 20 to a charging device (not shown) when the body 20 is detached from the cartridge assembly 30. The other end of the charging device can be plugged into an external power supply, for example a USB socket, to charge or to re-charge the battery 54 in the body 20 of the e-cigarette. In other implementations, a separate charging interface may be provided, for example so the battery 54 can be charged when still connected to the cartridge assembly 30.

The e-cigarette 10 is provided with one or more holes (not shown in Figure 1) for air inlet. These holes, which are in an outer wall of the body 20 (but in other examples may be in an outer wall of the cartridge assembly 30), connect to an airflow path through the e-cigarette 10 to the mouthpiece 35. The air flow path may include a pressure sensing region (not shown in Figure 1) in the body 20, and then connects from the body 20 into cartridge assembly 30 to a region around the heating element 40 so that when a user inhales through the mouthpiece 35, air is drawn into the airflow path through the one or more air inlet holes. This airflow (or the resulting change in pressure) is detected by a pressure sensor (not shown in Figure 1) in communication with the airflow path that in turn activates the heater 40 (via operation of the circuit board 28) to vaporise a portion of the source liquid to generate the aerosol. The airflow passes through the airflow path, and combines with the vapour in the region around the heater 40 and the resulting aerosol (combination of airflow and condensed vapour) travels as an aerosol stream along the airflow path connecting from the region of the heater 40 to the mouthpiece 35 to be inhaled by a user.

In some examples, the detachable cartridge assembly 30 may be disposed of when the supply of source liquid is exhausted, and replaced with another cartridge assembly if so desired. In other examples it may be refillable with more source liquid. The body 20 may be intended to be reusable by recharging of the battery, for example to provide operation for a year or more by connection to a series of disposable detachable cartridges assemblies.

The aerosol provision system 10 further includes a flavour delivery device 25. In this example, the flavour delivery device 25 is located in the cartridge assembly 30. The device operates to deliver flavourant to the aerosol stream in a controllable manner, as is described further below. Hence, it is positioned so as to be in airflow communication with the airflow path, so that flavour delivered by the device is incorporated into the air flowing through the airflow path and hence into the aerosol stream for delivery to the user via the mouth. The flavour delivery device may be positioned upstream or downstream of the heater 40 and the reservoir 38 with respect to the direction of airflow. Hence, the flavouring may be delivered into the airflow before the aerosol is generated, or into the aerosol stream once generated. In the former case, the flavour delivery device might be positioned in the body (battery) section 20 instead of the cartridge assembly 30. The flavour delivery device may be incorporated as a permanent component of either section, in particular the cartridge assembly 30 if this part is intended to be disposable. Alternatively, the flavour delivery device may be a separate consumable component that the user inserts into one or other section of the e-cigarette as required, and replaces when the flavour has been consumed or if a different flavour is desired. In such cases, it is convenient if the flavour delivery device is received into the e-cigarette in a location adjacent to the engagement elements 21, 31 for ease of access when the two parts of the e-cigarette are separated. Other locations may also be used, for example if the cartridge assembly 30 or body 20 is configured to be separable at a further location distinct from the engagement elements, or if an access slot or hatch is provided for insertion of the flavour delivery device through an outer wall of the electronic cigarette.

Figure 2 shows a schematic longitudinal cross-sectional view through a middle part of an example e-cigarette similar to that of Figure 1, where the cartridge assembly 30 and the body 20 connect, although they are illustrated in a separated configuration. In this example, the side walls 32, 22 of cartridge assembly 30 and the body 20 are shaped to allow a push fit (snap fit, bayonet or screw fittings may also be used). This brings the engaging elements 21, 31 into engagement, providing an electrical connection between the battery 54 in the body 20 and the heater 40 and the flavour delivery device 25 in the cartridge assembly 30. The side wall 22 of the body 20 has a pair of holes 24 (more or fewer holes may be employed) which allow the inlet of air, shown by the arrows A. The holes connect to a first part of a central air flow path or channel 56 located in the body 20, which is joined to a second part of the air flow channel 56 located in the cartridge assembly 30 when the cartridge assembly 30 and the body 20 are connected, to form a continuous air flow channel 56 to the mouthpiece (the air flow therein being depicted by the arrows A). The heater 40 is located within the air flow channel 56 so that air can be drawn across it to collect vaporised source liquid when a user inhales through the mouthpiece to pull air in through the holes 24. The heater 40 receives a supply of source liquid from the e-cigarette's reservoir (not shown in Figure 2), for example by wicking (depending on the material and structure of the heating element). Air pressure changes caused by inhalation are detected and cause (under control of the circuit board 28) electrical power to be supplied from the battery 54 to the heater 40 to achieve the required heating and vaporisation to generate the aerosol stream.

Electrical power for heating is also provided from the battery 54 to the flavour delivery device 25. In this example the device 25 is located in a side wall of the air flow channel 56 adjacent to the connecting end of the cartridge assembly 30 so that it can release flavour directly into the flowing air and also be readily inserted and removed by the user when the cartridge assembly 30 is separated from the body 20. Flavourant F is emitted in a vaporised form from the flavour delivery device 25 under application of electrical current from the battery 54, and delivered directly into the air flow channel 56 to be picked up by the air flow A. It is then carried along the air flow channel 56 to the heater 40 where the aerosol is generated, and is hence incorporated into the aerosol stream.

Note that in this example the flavour delivery device is shown disposed directly in the airflow channel 56. This is not essential; the device may alternatively be located in a chamber, slot or other aperture separate from the airflow channel but having an airflow communication therewith for transfer of flavourant to the aerosol stream.

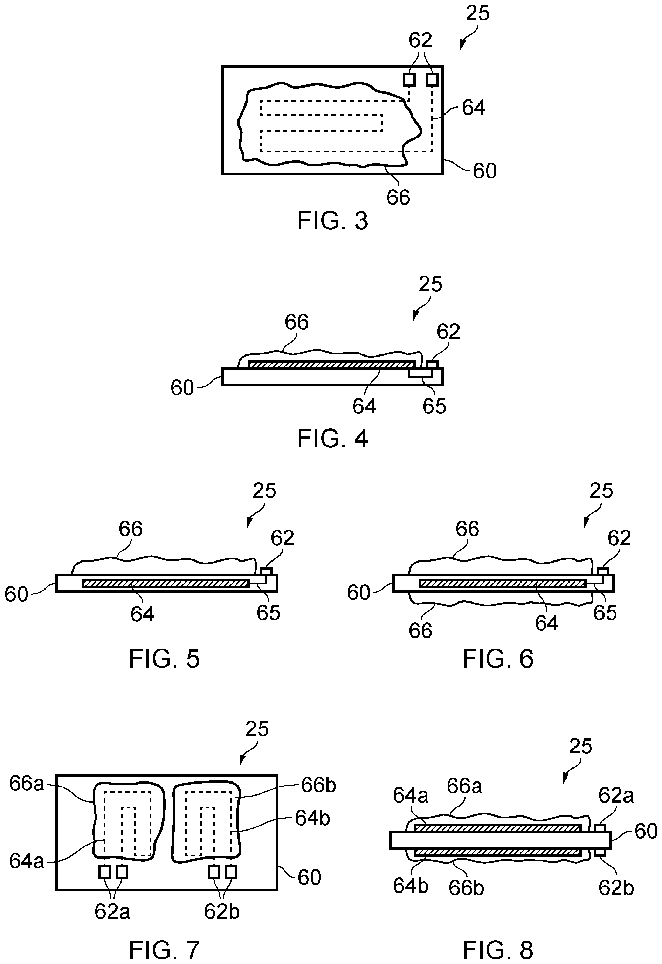

Figure 3 shows a plan view of a first example of a flavour delivery device 25. The device 25 comprises a support member 60, which conveniently may be planar but might have an alternative configuration for example to fit more efficiently within a particular configuration of e-cigarette. For example, it might be tubular or ring-shaped so as to surround the air flow channel. The support member 60, which should be electrically insulating, may be formed from fibre glass board, for example, although other materials may be used. Two or more electrical connectors 62 are formed on the surface of the support member 60 such that when the device 25 is inserted into an e-cigarette, the electrical connectors make electrical contact with other connectors in electrical connection with a battery in the e-cigarette (such as the battery 54 in Figures 1 and 2). The electrical connectors 62 are connectors to supply electricity to a heating element 64 disposed on or in the support member 60. Figure 3 shows a heating element 64 which has a serpentine shape winding across the area of the support member 60; other elements may have a zig-zag, curved, spiral, straight or other shape, and/or two or more separate heating elements may be provided, in any shape or pattern.

A flavourant provider or flavourant providing material 66 is disposed as a layer over the surface of the support member 60, so as to cover at least part of the area served by the heating element 64. The flavourant provider comprises a matrix or substrate material which holds a flavourant material within it. The flavourant material may be any flavouring substance which can take the form of a vapour, either as a gas or as liquid droplets, so as to be carried by the airflow and incorporated into the aerosol stream. Hence the flavourant may be a volatile substance. The vapour state may be present at typical room temperatures, or may be formed from a liquid or solid flavourant material under the action of heat. The matrix or substrate material may be any suitable material that has a solid or near-solid (a gum or paste for example) state at room temperature, and which can hold the flavourant material incorporated into it. For example, the flavourant material may be formed into a mixture with the matrix material (for example a liquid flavourant mixed into the matrix material), or it may be encapsulated (in microcapsules by any known technique, for example) and the capsules mixed into the matrix material, or the matrix material may be formed with an interstitial structure and the flavourant material injected or deposited into the interstices (for example by immersion of the matrix material into a bath of liquid flavourant). Additionally, the matrix material has the property of changing state when heated, so that heat applied by the heating element causes it to wholly or partially transition from one state to or towards another, in particular from a solid or gel state towards or into a liquid state. The heated and thereby softened matrix material can release the vapour state of the flavourant material from it. In some cases, the matrix material need only change towards a liquid state (become less solid), and in some cases it will become liquid, i.e. it will melt. In the context of the present disclosure, the matrix material is considered to soften under the application of heat to release the flavourant material, where softening includes becoming less solid as well as melting to a liquid or near-liquid state. The amount (degree) of softening required depends in part of the volatility of the flavourant and the manner in which it is held in the matrix material. A more volatile flavourant may be able to escape from a slightly softened matrix, such as through interstices in the matrix or by rupturing the surrounding matrix material if the vapour pressure is high enough. A lower volatility may require melting of the matrix for the flavourant to be released. Some flavourants may require a full collapse, disintegration or other degrading of the structure of the matrix material to escape; this might be achieved by melting. The term "softening" is intended to cover all these various changes, and indicates that a full or partial heat-induced state change towards a less solid form is provided by the heating element to release the flavourant from the matrix. The flavourant may be able to vaporise directly from the matrix material, possibly also under the action of the applied heat which may drive the vapour out of the matrix material. Alternatively, softening of the matrix material and/or encapsulated material may allow the flavourant to be released, either still as a liquid to be subsequently vaporised, or directly into a vapour state.

Suitable materials for the matrix or substrate include waxes (which are typically lipophilic and non-porous; examples include natural and synthetic waxes, such as animal waxes for example beeswax, mineral waxes for example montan wax, petroleum waxes for example paraffin waxes, polyolefin waxes for example polyethylene waxes and polypropylene waxes, and vegetable waxes for example candelilla wax, carnauba wax, castor wax and soy wax), gelatin, alginates and gums (such as xanthan gum), and starches. The purpose of the matrix material is to hold the flavourant material in such a way that loss of the flavourant material from the matrix material at typical room temperatures (15°C to 30°C, for example) is minimal (zero or very low), but to release the flavourant material as a vapour once heat is applied to soften the matrix material. Temperatures in the range of 25°C to 70°C or 80 °C, or 25C ° to 60C °, or 30C ° to 70C °, or 30C ° to 80C °, or 40C ° to 70C °, or 40C ° to 80C°C may be suitable to produce the required release of the flavourant material, but the exact temperature will be selected with reference to the type of matrix material and the type of flavourant material. For example, a higher temperature might be used, such as between 80°C and 100°C. The heating element and the supply of electrical current thereto from the battery can be configured to apply an appropriate level of heating to reach the desired temperature for the flavourant provider. The heating should be achieved within a time scale for the flavourant to be delivered into the aerosol stream as the user inhales, so should preferably be fairly rapid. For example, the required heating of the flavourant provider may be delivered concurrent with the start time of the inhalation, or starting within half a second or less of the inhalation start time. Other configurations, such as under user control, may enable the heater to be activated in advance of the inhalation start time to give an immediate boost of flavour as soon as the user inhales. Electrical current for heating is provided for a fixed duration (which may be variable between inhalations, but may be such as for about 1 second at the start of an inhalation, which will typically have a 3 second duration), and after the heating has been applied, the matrix material will cool and harden/resolidify back to its usual room temperature state to retain the remaining flavourant material. A matrix material able to cool relatively quickly may be preferred to avoid loss of flavourant material between puffs. Heating for less than the expected inhalation time (for example, 3 seconds) may be preferred for conserving the flavourant material, since flavourant released in later parts of the inhalation will be less effectively delivered to the user, so is in effect wasted.

The thickness of the layer of flavourant provider 66 can be selected with regard to factors including the total volume of flavourant material it is desired to provide in a single device, and how quickly the heat can be delivered from the heating element 64 to the outer surface of the flavourant provider 66 (determined by factors including the thermal properties of the flavourant provider).

The flavourant provider layer can be applied to the support member 60 in any convenient manner having regard to the form of the material and the required thickness. A thicker material such as a paste, gum or wax might be applied by a spreading technique, for example by injecting or depositing a portion of flavourant provider onto the surface of the support member and moving the support member past a spreading blade or between rollers. The material may be heated slightly to soften it and aid spreading, but the temperature should be kept below that at which the flavourant material is released. In other examples, the flavourant provider may be formulated as a liquid (for example containing encapsulated flavourant suspended in a liquid matrix material) which can be sprayed, painted or printed onto the support member, and allowed to dry to form the required layer. Multiple layers might be applied to achieve the desired thickness. Alternatively with a liquid or semi-liquid formulation, the support member may be dipped into a reservoir of flavourant provider, either surface first to apply a portion to one surface of the support member only, or edge first if portions are required on both surfaces of the support member. In yet further examples, portions of flavourant material might be moulded into solid or semi-solid rigid or flexible tablets or lozenges which can be adhered to the surface of the support member.

The flavourant material is intended to add a taste and/or an aroma to the aerosol air stream (in addition to any flavour contributed from the source liquid, although the flavour delivery device allows the use of unflavoured source liquid if desired). As used herein, the terms "flavour" and "flavourant" refer to materials which, where local regulations permit, may be used to create a desired taste or aroma in a product for adult consumers. They may include extracts (e.g., liquorice, hydrangea, Japanese white bark, magnolia leaf, chamomile, fenugreek, clove, menthol, Japanese mint, aniseed, cinnamon, herb, wintergreen, cherry, berry, peach, apple, Drambuie, bourbon, scotch, whiskey, spearmint, peppermint, lavender, cardamom, celery, cascarilla, nutmeg, sandalwood, bergamot, geranium, honey essence, rose oil, vanilla, lemon oil, orange oil, cassia, caraway, cognac, jasmine, ylang-ylang, sage, fennel, piment, ginger, anise, coriander, coffee, or a mint oil from any species of the genus Mentha), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, oil, liquid, or powder, that allows delivery of flavourant vapour.

Figure 4 shows a cross-sectional view of an example flavour delivery device. In this example, the heating element 64 is formed on the outer surface of the support member 60. This may be by depositing a resistive track using any conventional technique for fabricating printed circuit boards, for example. Other techniques may be used as preferred. The heating element 64 is connected at its ends to the connectors 62 by conducting elements 65, which are shown passing within the support member 60 for clarity, but can conveniently be formed on the surface together with the heating element 64 and the connectors 62, possibly in a single fabrication step. The portion of flavourant provider 66 is then applied as a layer over the top of the heating element 64.

Figure 5 shows a cross-sectional view of a further example flavour delivery device. In this example, the heating element 64 is disposed within the thickness of the support member 60, rather than on its surface. Such a structure may be fabricated by sandwiching a resistive wire between two layers of fibre glass or other board, for example. The heating element 64 is connected to the connectors 62 on the surface of the support member 60 by conducting elements 65. The portion of flavourant provider 66 can then be applied to either surface of the support member 60, depending on the structure of the e-cigarette in which the flavour delivery device is intended to be used and the relative positions of electrical connections and the air flow channel. Figure 5 shows the portion 66 applied to the same surface as the electrical connectors 62, but it may instead by applied to the opposite surface. For example, it may be convenient to configure electrical connectors in the e-cigarette to mate with the side of the flavour delivery device remote from the part of the airpath to which the flavourant provider is exposed.

Figure 6 shows a cross-sectional view of another example flavour delivery device. This example has the same structure as that in Figure 5, with a heating element 64 disposed within the support element 60. It differs from the Figure 5 example by having a portion of flavourant provider 66 applied to both sides of the support member 60. This configuration can be used in e-cigarettes configured such that air or aerosol flowing in the air flow channel can pass over both sides of the flavour delivery device, to collect released flavourant vapour from both portions of flavourant provider. This can double the amount of flavourant material carried by a single device, for example, or allow the portion of flavourant provider to be divided into two thinner layers so that the heating effect can reach the portion surface more quickly. Alternatively, a portion of flavourant provider may be applied to both sides of the support member in a device having a surface-supported heating element if the support member is sufficiently thin and/or a sufficiently good conductor of heat for the heating element to deliver adequate heat energy through the thickness of the support member to the flavourant provider on the opposite surface.

In any embodiment, the electrical connectors 62 can be positioned on either side of the support element 60 as convenient, or the pair of connectors 62 can be arranged so that one connector 62 is on a first side of the support member 60 and the other connector 62 on the second side of the support member 60. Alternatively, one or both connectors 62 might be located on one or more edges of the support member 60. Any position can be used, to make connections with mating connectors in preferred locations within the e-cigarette.

The Figures 3 to 6 example devices have a single heating element. In alternative examples, two or more separate heating elements might be provided. The heating elements might serve the same flavourant provider portion and be addressable individually or together according to choice, to increase control over the level of heating and hence level of flavourant release provided at any given time. Alternatively, separate portions of flavourant provider may be arranged to be heated by the separate heating elements. The heating elements might then be configured to be addressed sequentially, so that a second portion can deliver flavourant once a first portion has been consumed. As an alternative, the heating elements may be addressed individually according to consumer choice so as to release flavour from a selected portion on demand. In this way, more than one flavourant can be delivered from a single flavourant delivery device.

The heating elements may be disposed to serve opposite sides of the support member, or to serve different regions of the same side of the support member. The various portions of flavourant provider can be applied to the support member accordingly, in correspondence with the heating elements. The heating elements may be on the surface of the support member, as in Figure 4, or within the thickness of the support member, as in Figures 5 and 6.

Figure 7 shows a plan view of a first example device with two heating elements. In this example, the two heating elements 64a, 64b with corresponding electrical connectors 62a, 62b are disposed side-by-side on the same surface of the support member 60. Each has a corresponding flavourant provider portion 66a, 66b. The portions may comprise different flavourants or the same flavourant.

Figure 8 shows a cross-sectional view of a second example device with two heating elements. In this example, the two heating elements 64a, 64b with corresponding electrical connectors 62a, 62b are disposed one on each opposite surface of the support member 60. Each has a corresponding flavourant provider portion 66a, 66b, which may comprise the same or different flavourants.

These designs can be extended to provide any number of separate heating elements, arranged on one or both sides of the support member. Each heating element may serve a separate portion of flavourant provider, or a single portion of flavourant provider may cover two or more heating elements.

In further alternative designs, a flavour delivery device may comprise a heating element and a portion of flavour delivery material in contact therewith, without any support member. If the heating element is structured so as to be largely self-supporting, for example formed from rigid or resilient wire or stamped or cut from an appropriate thickness of metal, there may be no requirement for a support member. The heating element may have a surface coating of flavour provider (formed for example by dipping the heating element into a liquid formulation of flavour provider), or may be wrapped or coiled around, or inserted into, a solid or semi-solid portion of flavour provider. The ends of the heating element can be shaped as the electrical connectors for insertion into socket connectors in the electronic cigarette to create the required electrical connection to the battery.

The electronic cigarette has a socket, recess, aperture, cavity, receptor or similar to receive, hold and accommodate the flavourant delivery device, and make the required electrical connections to the electrical connectors of the heating element to provide electrical power to the heating element from the battery of the electronic cigarette. The socket may be configured so that the flavourant delivery device can be removed by a user and replaced with a different device, or the flavourant delivery device may be included as a non-replacement component in a disposable cartridge assembly, in which case access to the flavour delivery device is not required and it can be sealed inside the assembly in an inaccessible position. Any configuration can be utilised to accommodate the flavourant delivery device.

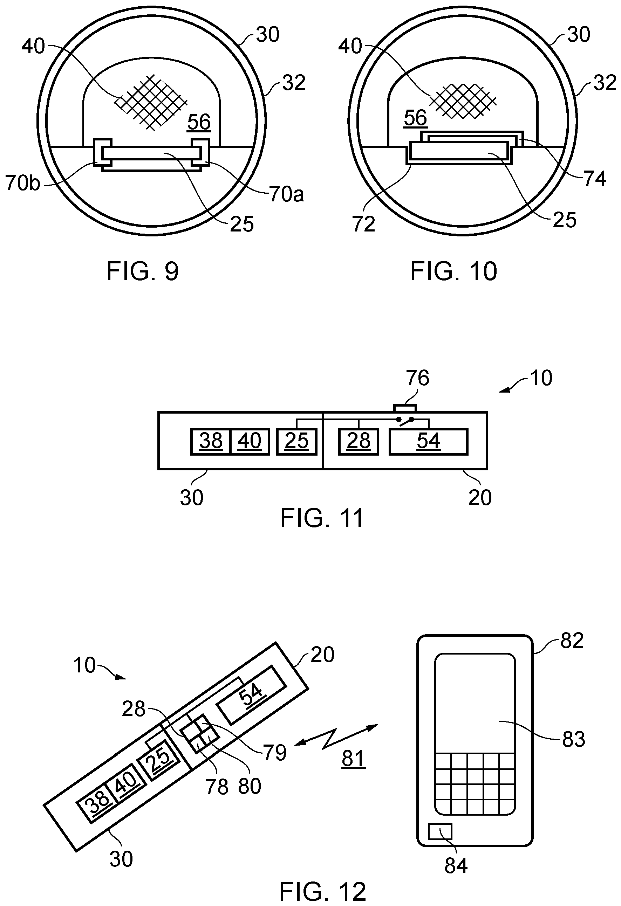

Figure 9 shows a simplified view of a first example configuration for a flavour delivery device within a cartridge assembly 30, shown as an end view of the cartridge assembly disconnected from its body (battery) section, looking into the interior of the cartridge assembly. Not all components are shown. The cartridge assembly 30 has a circular cross-section bounded by an outer wall 32, and has an air-flow channel 56 formed substantially centrally within it. The heating element 40 of the aerosol source is visible inside the channel. The flavour delivery device 25 slots into a socket at one side of the air flow channel. A pair of oppositely facing u-shaped tracks 70a, 70b are provided which receive and grip opposite edges of the flavour delivery device 25. The device 25 can be slid into these tracks 70a, 70b which guide it into the received position in which the electrical connections are made. The tracks 70a, 70b can be conductive (for example made from a metallic conductive material) so as to form the electrical connectors of the electronic cigarette to connect with those on the flavour delivery device 25, or have electrical connectors mounted thereon, or can be shaped to guide the flavourant delivery device 25 into a position that makes contact with electrical connectors mounted on another part of the electronic cigarette. As depicted, the tracks 70a, 70b hold the flavour delivery device 25 spaced apart from the adjacent wall of the air flow channel 56 so that air can flow over both surfaces of the device. The device 25 may therefore have a portion of flavourant provider on each surface, if desired. Alternatively, the tracks 70a, 70b may hold the device 25 substantially flush with the air flow channel wall so that air can flow over one surface only.

Figure 10 shows a simplified view of a second example configuration for a flavour delivery device within a cartridge assembly 30, again shown in end view. This configuration holds the flavour delivery device 25 in a similar location to the Figure 9 example. There is a shallow recess 72 in the side wall of the air flow channel into which the flavour delivery device 25 can be pushed. A resilient, biased or spring-loaded arm 74 attached at one end to part of the cartridge assembly extends over the recess 72 to press against the installed device 25 and hold it in position, in a similar manner to how a subscriber identity module (SIM) is held inside a mobile telephone. The arm 74, formed for example from bent metal, can itself form the electrical connectors if appropriately shaped, or may have the connectors otherwise provided on it, or may simply hold the device 25 in a correct position for contact with electrical connectors in the cartridge assembly.

In both the Figure 9 and Figure 10 examples the flavour delivery device is easily accessible from the open end of the disconnected cartridge assembly so can be removed by the user and replaced if required. The examples are not limiting, and any alternative configuration for receiving, holding and connecting the flavour delivery device may be used as desired. Many alternatives will be readily apparent to the skilled person.

In order to provide the user with control over flavour delivery, the heating element of the flavour delivery device can be provided with electrical power independently from the supply of electrical power to the aerosol source heater. If the heating element and the heater receive electrical power simultaneously from the battery in response to air pressure changes caused by inhalation, flavour is delivered in a fixed manner with every puff until the flavourant material has all be released. By de-coupling the electrical supply of the heating element from that of the heater and making it independent, flavour can be delivered as desired by the user, for example a greater or smaller amount in each puff or in only some puffs.

This control can be implemented in a variety of ways. A simple example is a switch on the exterior of the electronic cigarette which the user can operate during any inhalation to which he desires to add flavour. Electrical power can be delivered to the heating element whenever the switch is activated, and turned off when the switch is deactivated. Alternatively, the switch can operate to turn on the heating element as the user desires, but if it has not already been turned off the electrical power supply is automatically terminated at the end of the inhalation (detected by the pressure sensor used to control power supply to the aerosol source) so that it is not possible for the flavour delivery device to be left on for an extended period. This improves safety to avoid overheating, and reserves the release of flavour for the times it is actually needed, so the flavourant is not wasted. As an extension of this arrangement, the switch can be configured to that it cannot be operated to turn the heating element on unless an inhalation has been detected by the pressure sensor. In this way, the heating element can only be operated while a user is inhaling through the electronic cigarette.

The switch can take any convenient format, such as a touch-sensitive switch, a push button, a toggle switch or a sliding switch. It can be positioned on any outer part of the electronic cigarette, but is preferably in a location where the user can easily operate it when holding the electronic cigarette during inhalation but where a deliberate action is needed to operate it to avoid accidental operation. If the switch is provided on the body section which accommodates the battery, it is not included in the potentially disposable cartridge assembly section and can have an extended lifetime. It may be located on the cartridge assembly if preferred, however.

Figure 11 shows a highly schematic simplified diagram of an electronic cigarette configured with a switch to operate a flavour delivery device. As with the example of Figure 1, the electronic cigarette 10 comprises a cartridge assembly 30 connectable to a body section 20, and housing an aerosol source comprising a reservoir 38 and a heater 40, and a flavour delivery device 25. The body 20 houses a battery and a PCB 28 with a pressure sensor. Joining the cartridge assembly 30 to the body 20 forms an electrical connection between the two parts so that electrical power can be provided from the battery to the heater 40 and the flavour delivery device 25. The PCB 28 controls the supply of electrical power to the heater (via circuitry not shown) in response to pressure changes detected by the pressure sensor. The body 20 further comprises a user-operable external switch or button 76 on its outer surface that actuates a switch 78 in circuitry within the body. When the switch 78 is closed, electrical power is delivered from the battery 54 to a heating element of the flavour delivery device 25. The PCB may be joined to this circuitry too and appropriately configured to provide a degree of further control so that the switch 78 can only be closed during times when the pressure sensor detects an inhalation, as described above. Otherwise, the PCB maintains the switch 78 in the open position so that the heating element of the flavour delivery device is inoperable.

A switch-operated flavour delivery device provides the user with the option to add flavour or not add flavour to any puff, and by keeping the switch closed for a longer or shorter time control over the amount of flavour per puff can be achieved. A more sophisticated level of control can be achieved by providing programmable control over the heating element operation, however.

Figure 12 shows a highly simplified (not to scale) representation of an example electronic cigarette configured for programmable control. The electronic cigarette 10 comprises the same components as the Figure 11 example, with a battery 54 in the body section 20 providing electrical power to a flavour delivery device 25 in the cartridge assembly 30, via circuitry. A PCB 28 providing general operational control for components in the electronic cigarette 10 has control over the supply of electrical power from the battery 54 to the flavour delivery device 25. The PCB 28 includes a microprocessor 78 and memory 79 bearing computer code executable by the microprocessor 78 to control how and when the battery provides electrical power to operate one or more heating elements of the flavour delivery device. The control may be according to control parameters such as which heating element to operate (in the event there is more than one); which puffs to operate the heating element for (every puff, alternate puffs, the first one, two or three puffs after switch-on of the electronic cigarette, for example); how much power to deliver (to control how hot the heating element will get and hence how much flavour will be released); and how long to deliver power for in any given puff.

To allow a user to customise these parameters, the stored computer code can be modified or re-programmed. The PCB 28 comprises a data transceiver element 80 configured to communicate wirelessly with a transceiver element 84 in a computing device 82. The transceiver elements are configured to establish a wireless communication path 81; this may be by any convenient wireless method such as by Bluetooth or radio frequency communication or infrared signals. The computing device 82 may be any device able to receive user input and transmit this information over the wireless communication path 81, such as but not limited to a mobile telephone, a smart phone, a tablet device, a smart watch, a laptop computer or desktop computer. The computing device 82 is provided with appropriate software (downloadable from the internet or otherwise installed by the user according to the model of electronic cigarette the user has, for example) to allow programming of the flavour delivery device 25. A display 83 on the computing device 82 presents a user interface that prompts the user to enter appropriate information to configure the control parameters. For example, a list of available flavours may be presented for selection, and the user may chose which puffs to add flavour to, and enter the level of flavour desired in each chosen puff. This might be via a slider control, for example, which allows selection of a flavour level between a maximum and a minimum, with the computing device 82 and/or the microprocessor 78 of the PCB 28 converting the chosen level into an amount of electrical power required to deliver that flavour level. Once the parameters have all been set to the user's satisfaction, data representing the parameters is transferred from the computing device 82 to the electronic cigarette 10 via the communication path 81, for example in response to user activation of a "done" or "save" control on the user interface. The data is stored in the memory 79 for execution by the microprocessor 78 during future use of the electronic cigarette 10.

For control purposes, the data transceiver element may be configured for data reception only. However, if it is also configured for transmission, the electronic cigarette can communicate back to the user device, for example to notify when the flavour delivery device is about to expire (all the flavourant has been released, estimated from the amount of heating provided to release the flavour since the device was installed, for example). Also, the electronic cigarette can automatically notify the computing device of the type or model of flavour delivery installed so that the computing device can prompt the user to program the appropriate control parameters. To achieve this, the flavour delivery device 25 may be provided with an identity code embedded in circuitry or software that is readable by the microprocessor 78 via the circuitry. In the absence of this, the user can enter the device type into the computing device, by selecting it from a list presented by the user interface, for example. The computing device can then present an appropriate user interface for programming of the parameters relevant to the particular flavour delivery device.

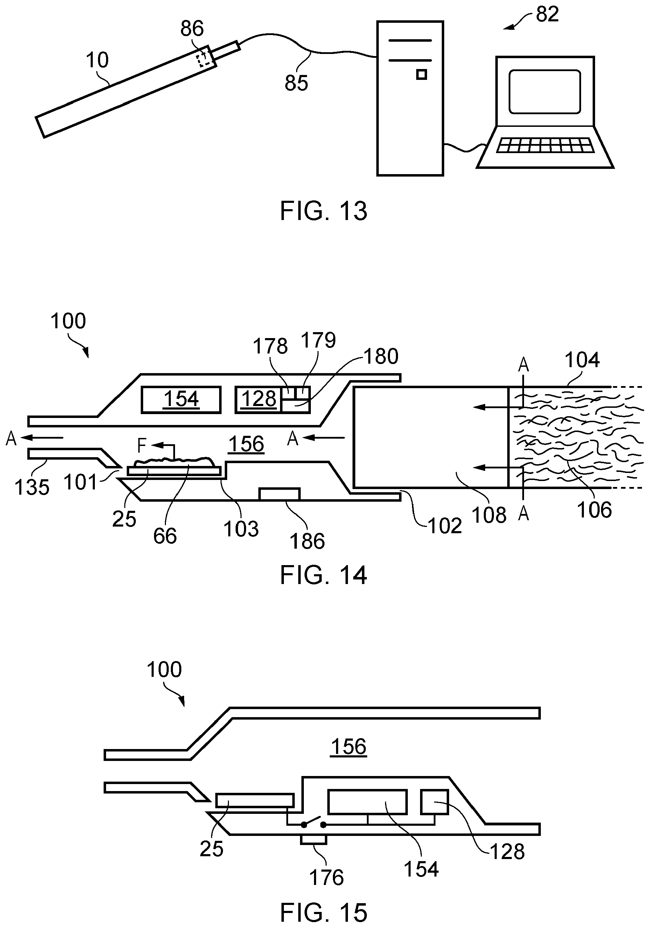

Alternatively, an electronic cigarette may be configured for programming via a wired connection to a computing device. Figure 13 shows a highly simplified (not to scale) representation of such an arrangement. The electronic cigarette 10 has a data socket 86 into which a data transfer cable 85 can be plugged to allow the electronic cigarette 10 to be connected to a computing device 82, which in this example is a desktop computer system. The data transfer may be via USB or Ethernet, for example, although any data transfer protocol might be employed. Conveniently, the data socket 86 can be embodied also as a charging socket for recharging the battery of the electronic cigarette; a USB port will be convenient for this, for example. Otherwise, the system can operate in the same or similar manner to that described with respect to Figure 12. The computing device has software to present a user interface for input of desired control parameters by the user, and these are transferred to memory on the electronic cigarette via the data cable 85.

Note that the functions of the PCB (or other electronics) and its components may be achieved using any combination of software, hardware and firmware as required.

Thus far, examples of the invention have been described in the context of electronic cigarettes or other aerosol and vapour provision systems. It is not so limited, however. Embodiments can be used to add flavour to conventional combustible smoking articles such as those based on tobacco consumption.

To implement this, it is proposed to provide a holder for a combustible smoking article through which the user inhales to consume the combustible smoking article, in the manner of a conventional cigarette holder, for example, where the holder can also house and power a flavour delivery device such as any of the examples described above.

Figure 14 shows a simplified schematic cross-sectional view of an example combustible smoking article holder 100. The holder 100, which may be made from moulded plastics or other materials, is substantially a tubular structure with a central bore forming an air flow path 156 extending between an opening 102 at a combustible smoking article end into which a combustible smoking article 104 can be inserted for consumption, and a mouthpiece 135. When a combustible smoking article 104 is inserted into the holder 100 and lit, the user inhales through the mouthpiece. This draws air into the tobacco rod 106 of the combustible smoking article where it collects smoke, nicotine and other components released from the burning tobacco in the usual manner. This is drawn through the filter 108 of the combustible smoking article (or simply out of the combustible smoking article's end if it is filterless) and into the airflow path 156 inside the holder 100, whence the user inhales it through the mouthpiece. This airstream A corresponds to the aerosol stream in an electronic cigarette, and for the purposes of this disclosure the terms are interchangeable.

The holder 100 is configured such that a flavour delivery device 25 can be inserted into it so that flavour F released by a flavourant material portion 66 on the device 25 is picked up by the airstream through the holder, thereby adding flavour to the output of the combustible smoking article. The holder 100 has a slot 101 in a side wall into which a flavour delivery device can be inserted. The slot 101 gives access to a socket 103 in the form of a recess in the side of the airflow path 156 which receives and holds the flavour delivery device 25 in a position in which flavour released from it is communicated into the airflow path 156. The holder may alternatively be configured and designed to receive and hold the flavour delivery device in any other convenient manner. The holder 100 is provided with a battery 154 and a PCB 128 or other control electronics (including a pressure detector in some embodiments for detecting when a user is inhaling though the holder 100) similar to those described above with regard to the electronic cigarette examples. Electrical contacts and circuitry connect the installed flavour delivery device 25 to the battery 154 for provision of electrical power to heating elements of the flavour delivery device 25. The PCB and its microprocessor 178 control the heating in accordance with control parameters stored in computer code in the memory 179. The parameters may be programmed or updated according to user preference via data updates received from a computing device by a transceiver element 180, as before. A socket 186 is provided for recharging the battery; this may also provide control parameter or other data to the memory 179 via a wired connection to a computing device, again as before.

With a holder such as this example, it is possible to add any flavour to a conventional combustible smoking article entirely at the desire and demand of a user. This provides considerably more sophisticated flavour addition than the simple addition of flavourants into the tobacco material or filter material to include flavour in every puff at a predetermined level that cannot be modified by the user.

Alternatively, a holder can be configured for switch-operated flavour control, similar to the switch-operated functionality of the Figure 11 electronic cigarette.

Figure 15 shows a simplified schematic cross-sectional representation of an example holder configured with a switch. The holder 100 has an switch 176 (of any desired format, as before) located on its outer wall that operates to connect the battery 154 to the heating element of the flavour delivery device 25, thus providing heating and flavourant release. Control electronics 128 possibly including a pressure sensor may be included to limit operation of the heating element to times when a user is inhaling through the holder 100, for safety reasons and to conserve the flavourant, again as described with respect to electronic cigarette examples. A holder of this type allows a user to add flavour to any puff of a combustible smoking article simply by operating the switch, and the flavour delivery device can be changed at any time to alter the flavour if desired.

Furthermore, smoking article holders configured to include a flavour delivery device may alternatively be used to hold and add flavour to an electronic aerosol provision system (such as an electronic cigarette) instead of a combustible smoking article. Hence, references to "smoking article holder" include holders configured to hold either combustible smoking articles, electronic aerosol provision systems, or both.

Note that it is also possible to provide the functions of the PCB or other electronics in controlling the operation of the heating element directly on the flavour delivery device rather than in the electronic cigarette or smoking article holder. The processor, memory and data transceiver may be mounted on the support member and provided with appropriate circuitry and electrical power supply. While this adds to the cost and complexity and possibly the size of the flavour delivery device, it allows the device to be used with an electronic cigarette having a PCB that is not configured for flavour delivery control. For example, the user may replace a disposable cartridge assembly component with one configured to receive a flavour delivery device while keeping an existing reusable body component of their electronic cigarette.

The examples described so far have all utilised conventional resistive electrical heating to release flavourant from the flavour delivery device. The device has one or more heating elements which are connectable by wires, leads or the like to an electrical power source (battery) to produce current flow through the heating element so that the temperature of the heating element is increased. The amount of heat generated depends on the electrical resistance of the heating element and the amount of current flowing through it or voltage (potential difference) applied across it.

As an alternative, a flavour delivery device might use induction (inductive) heating to generate heat in the heating element(s). Induction heating is a phenomenon that allows heating of an electrically conductive item, typically made from metal, by electromagnetic induction. An electronic oscillator is provided to generate a high frequency alternating current that is passed through an electromagnet. In turn, the electromagnet produces a rapidly alternating magnetic field, which is arranged to penetrate the object to be heated, in this case a heating element in a flavour delivery device. The magnetic field generates eddy currents in the conductive material, and this flowing current generates heat via the resistance of the material. Hence, induction heating also requires current flow to generate heat from a material's electrical resistance, but the current is an eddy current generated by an external magnetic field, rather than a current obtained by a potential difference applied from an electrical power supply.

Accordingly, the configuration of a heating element with electrical contacts that make an electrical connection to an electrical power source such as a battery may be replaced by a heating element positioned within magnetic field range of an electromagnet driven by an associated electronic oscillator, which receives electrical power from a battery or other electrical power source. The examples discussed above include electrical contacts for the heating element; in inductive heating examples such physical contacts are not required, and the connection between the heating element and the power source is provided by the oscillator and electromagnet (or other arrangement for generating the required magnet field). The provision of electrical power to the heating element comprises application of a magnetic field to produce eddy currents, in place of the direct current flow through a physical electrical connection that provides electrical power in the resistive heating examples. In configurations which include more than one heating element, the magnetic field generation may be segmented (by providing an electromagnet per heating element, for example) so that the heating elements can be powered individually by operation of the corresponding electromagnet.

## Claims

1. A flavour delivery device (25) for adding flavour to an aerosol stream generated by a smoking article (10; 104), the device comprising:
an electrical heating element (64) configured for connection to an electrical power source (54);
a support member (60) in or on which the heating element is supported, the support member also supporting electrical contacts (62) configured to connect the heating element to an electrical power source (54) housed in an electronic aerosol provision system (10) or smoking article holder (100); and
a portion (66) of flavourant provider disposed as a layer over a surface of the support member and arranged to receive heat from the heating element, the flavourant provider comprising flavourant material held in a substrate material, the flavourant material able to form a vapour and the substrate material softenable under the application of heat, wherein provision of electrical power to the heating element delivers heat to the flavourant provider to soften at least a part of the substrate material and release at least some of the flavourant material as a vapour (F).

2. A flavour delivery device according to claim 1, in which the smoking article is a combustible smoking article (104) and the flavour delivery device is configured to be provided in a holder (100) for the combustible smoking article, the holder comprising the electrical power source.

3. A flavour delivery device according to claim 1, in which the smoking article is an electronic aerosol provision system (10) comprising the electrical power source, and the flavour delivery device is configured to be provided in the electronic aerosol provision system.

4. A flavour delivery device according to any preceding claim, further comprising one or more further portions (66a, 66b) of flavourant provider.

5. A flavour delivery device according to claim 4, in which one or more portions of flavourant provider are arranged on each of opposite surfaces of the support member.

6. A flavour delivery device according to any preceding claim, further comprising one or more further heating elements (64a, 64b) configured to be individually provided with electrical power.

7. A flavour delivery device according to claim 6, comprising a separate portion of flavourant material arranged to receive heat from each heating element.

8. An electronic aerosol provision system (10), a component (30) of an electronic aerosol provision system or a smoking article holder (100) comprising a socket (72; 103) for receiving a flavour delivery device (25) according to any of claims 1 to 7 in a position that makes electrical connection with an electrical power source (54) in the electronic aerosol provision system or smoking article holder and from which flavourant material released by the flavour delivery device is able to enter an airflow path for an aerosol stream through the electronic aerosol provision system or smoking article holder.

9. An electronic aerosol provision system, a component of an electronic aerosol provision system or a smoking article holder according to claim 8, in which the socket is configured to allow a user to remove and replace the flavour delivery device.

10. An electronic aerosol provision system, a component of an electronic aerosol provision system or a smoking article holder according to claim 8 or claim 9, and comprising a computer processor (78) configured to execute computer code stored in a memory (79) to control the provision of electrical power to the heating element from the electrical power source.

11. An electronic aerosol provision system, a component of an electronic aerosol provision system or a smoking article holder according to claim 10, further comprising a data transceiver (80) configured to receive updated computer code for storage in the memory.

12. A flavour delivery device according to any one of claims 1 to 7, and further comprising a computer processor (78) configured to execute computer code stored in a memory (79) to control the provision of electrical power to the heating element, and a data transceiver (80) configured to receive updated computer code for storage in the memory.

13. A storage device storing computer code executable by a computer processor and operable to enable a computing device to:
display a user interface that prompts a user to enter control parameters relevant to the addition of flavour from a flavour delivery device (25) according to any one of claims 1 to 7 or 12 to an aerosol stream generated by an electronic aerosol provision system (10) or a combustible smoking article (104); and
transmit data representing the control parameters to a data transceiver (80) in an electronic aerosol provision system (10), a component (30) of an electronic aerosol provision system, a smoking article holder (100) or a flavour delivery device (25).

14. A method of adding flavour to an aerosol stream generated by a smoking article (10, 104), the method comprising:
arranging within an electronic aerosol provision system (10) or a smoking article holder (100) a flavour delivery device (25) comprising an electrical heating element (64), a support member (60) in or on which the heating element is supported, the support member also supporting electrical contacts (62) configured to connect the heating element to an electrical power source (54) housed in the electronic aerosol provision system or smoking article holder, and a portion (66) of flavourant provider arranged to receive heat from the heating element, the flavourant provider comprising flavourant material held in a substrate material, the flavourant material able to form a vapour (F) and the substrate material softenable under the application of heat;
providing electrical power to the heating element from the electrical power source in the electronic aerosol provision system or smoking article holder while a user is inhaling through the electronic aerosol provision system or smoking article holder, whereby the provision of electrical power delivers heat to the flavourant provider to soften at least a part of the substrate material and release at least some of the flavourant material as a vapour (F); and
delivering the released vapour into an aerosol stream (A) flowing in an airflow passage through the electronic aerosol provision system or smoking article holder.

15. A method according to claim 14, further comprising transmitting control parameter data from a computing device to a data transceiver (80) in the electronic aerosol provision system, smoking article holder or flavour delivery device, and controlling the provision of electrical power to the heating element using a computer processor in the electronic aerosol provision system, smoking article holder or flavour delivery device executing computer code in accordance with the control parameter data.

## Patentansprüche

1. Aromaabgabevorrichtung (25) zum Zugeben von Aroma zu einem von einer Rauchware (10; 104) erzeugten Aerosolstrom, wobei die Vorrichtung umfasst:
ein elektrisches Heizelement (64), gestaltet zur Verbindung mit einer elektrischen Energiequelle (54);
ein Trägerelement (60), in oder auf dem das Heizelement getragen ist, wobei das Trägerelement ferner elektrische Kontakte (62) trägt, die dafür gestaltet sind, das Heizelement mit einer elektrischen Energiequelle (54) zu verbinden, die in einem elektronischen Aerosolbereitstellungssystem (10) oder einem Rauchwarenhalter (100) untergebracht ist; und
eine Portion (66) Aromastoffversorgung, die als Schicht über einer Oberfläche des Trägerelements angeordnet ist und angeordnet ist, Wärme von dem Heizelement zu erhalten, wobei die Aromastoffversorgung ein in einem Substratmaterial gehaltenes Aromastoffmaterial umfasst, wobei das Aromastoffmaterial fähig ist, einen Dampf zu bilden, und das Substratmaterial unter der Anwendung von Wärme erweichbar ist, wobei die Abgabe von elektrischer Energie an das Heizsystem Wärme an die Aromastoffversorgung liefert, um wenigstens einen Teil des Substratmaterials zu erweichen und wenigstens einen Teil des Aromastoffmaterials als Dampf (F) freizusetzen.

2. Aromaabgabevorrichtung gemäß Anspruch 1, wobei die Rauchware eine verbrennbare Rauchware (104) ist und die Atromaabgabevorrichtung dafür gestaltet ist, in einem Halter (100) für die verbrennbare Rauchware bereitgestellt zu sein, wobei der Halter die elektrische Energiequelle umfasst.

3. Aromaabgabevorrichtung gemäß Anspruch 1, wobei die Rauchware ein elektronisches Aerosolbereitstellungssystem (10) ist, das eine elektrische Energiequelle umfasst, und die Aromaabgabevorrichtung dafür gestaltet ist, in dem elektronischen Aerosolbereitstellungssystem bereitgestellt zu sein.

4. Aromaabgabevorrichtung gemäß einem der vorstehenden Ansprüche, ferner umfassend eine oder mehrere weitere Portionen (66a, 66b) Aromastoffversorgung.

5. Aromaabgabevorrichtung gemäß Anspruch 4, wobei eine oder mehrere Portionen Aromastoffversorgung an jeweils gegenüberliegenden Oberflächen des Trägerelements angeordnet sind.

6. Aromaabgabevorrichtung gemäß einem der vorstehenden Ansprüche, ferner umfassend ein oder mehrere weitere Heizelemente (64a, 64b), die dafür gestaltet sind, einzeln mit elektrischer Energie versorgt zu werden.

7. Aromaabgabevorrichtung gemäß Anspruch 6, umfassend eine getrennten Portion Aromastoffmaterial, die dafür angeordnet ist, Wärme von jedem Heizelement zu erhalten.

8. Elektronisches Aerosolbereitstellungssystem (10), Komponente (30) eines elektronischen Aerosolbereitstellungssystems oder Rauchwarenhalter (100), umfassend eine Fassung (72; 103) zum Aufnehmen einer Aromaabgabevorrichtung (25) gemäß einem der Ansprüche 1 bis 7 in einer Position, die eine elektrische Verbindung mit einer elektrischen Energiequelle (54) in dem elektronischen Aerosolbereitstellungssystem oder Rauchwarenhalter bildet, und aus der von der Aromaabgabevorrichtung freigesetztes Aromastoffmaterial in einen Luftströmungsweg für einen Aerosolstrom durch das elektronische Aerosolbereitstellungssystem oder den Rauchwarenhalter eintreten kann.

9. Elektronisches Aerosolbereitstellungssystem, Komponente eines elektronischen Aerosolbereitstellungssystems oder Rauchwarenhalter gemäß Anspruch 8, wobei die Fassung dafür gestaltet ist, einem Benutzer zu ermöglichen, die Aromaabgabevorrichtung zu entfernen und zu ersetzen.

10. Elektronisches Aerosolbereitstellungssystem, Komponente eines elektronischen Aerosolbereitstellungssystems oder Rauchwarenhalter gemäß Anspruch 8 oder Anspruch 9, umfassend einen Computerprozessor (78), der dafür gestaltet ist, einen in einem Speicher (79) gespeicherten Computercode auszuführen, um die Abgabe elektrischer Energie von der elektrischen Energiequelle an das Heizelement zu steuern.

11. Elektronisches Aerosolbereitstellungssystem, Komponente eines elektronischen Aerosolbereitstellungssystems oder Rauchwarenhalter gemäß Anspruch 10, ferner umfassend einen Datentransceiver (80), der dafür gestaltet ist, aktualisierten Computercode zum Speichern in dem Speicher zu empfangen.

12. Aromaabgabevorrichtung gemäß einem der Ansprüche 1 bis 7, ferner umfassend einen Computerprozessor (78), der dafür gestaltet ist, einen in einem Speicher (79) gespeicherten Computercode auszuführen, um die Abgabe elektrischer Energie von der elektrischen Energiequelle an das Heizelement zu steuern, und einen Datentransceiver (80), der dafür gestaltet ist, aktualisierten Computercode zum Speichern in dem Speicher zu empfangen.

13. Speichervorrichtung, die einen von einem Computerprozessor ausführbaren Computercode speichert und funktionsfähig ist, einer Computervorrichtung zu ermöglichen:
eine Benutzerschnittstelle anzuzeigen, die einen Benutzer auffordert, Steuerparameter einzugeben, die für die Zugabe von Aroma aus einer Aromaabgabevorrichtung (25) gemäß einem der Ansprüche 1 bis 7 oder 12 zu einem von einem elektronischen Aerosolbereitstellungssystem (10) oder einer verbrennbaren Rauchware (104) erzeugten Aerosolstrom von Bedeutung ist; und
Daten, die die Steuerparameter darstellen, zu einem Datentransceiver (80) in einem elektronischen Aerosolbereitstellungssystem (10), einer Komponente (30) eines elektronischen Aerosolbereitstellungssystems, einem Rauchwarenhalter (100) oder einer Aromaabgabevorrichtung (25) zu übertragen.

14. Verfahren zur Zugabe von Aroma zu einem von einer Rauchware (10, 104) erzeugten Aerosolstrom, wobei das Verfahren umfasst:
Anordnen einer Aromaabgabevorrichtung (25), die ein elektrisches Heizelement (64), ein Trägerelement (60), in oder auf dem das Heizelement getragen ist, umfasst, innerhalb eines elektronischen Aerosolbereitstellungssystems (10) oder eines Rauchwarenhalters (100), wobei das Trägerelement ferner elektrische Kontakte (62) trägt, die dafür gestaltet sind, das Heizelement mit einer elektrischen Energiequelle (54) zu verbinden, die in dem elektronischen Aerosolbereitstellungssystem oder dem Rauchwarenhalter untergebracht ist, und eine Portion (66) Aromastoffversorgung dafür angeordnet ist, Wärme von dem Heizelement zu erhalten, wobei die Aromastoffversorgung in einem Substratmaterial gehaltenes Aromastoffmaterial umfasst, wobei das Aromastoffmaterial fähig ist, einen Dampf (F) zu bilden, und das Substratmaterial unter der Anwendung von Wärme erweichbar ist;
Abgeben von elektrischer Energie von der elektrischen Energiequelle in dem elektronischen Aerosolbereitstellungssystem oder dem Rauchwarenhalter an das Heizelement, während der Benutzer durch das elektronische Aerosolbereitstellungssystem oder den Rauchwarenhalter inhaliert, wobei die Abgabe von elektrischer Energie Wärme an die Aromastoffversorgung liefert, um wenigstens einen Teil des Substratmaterials zu erweichen und wenigstens einen Teil des Aromastoffmaterials als Dampf (F) freizusetzen; und
Abgeben des freigesetzten Dampfs in einen Aerosolstrom (A), der in einem Luftströmungsweg durch das elektronische Aerosolbereitstellungssystem oder den Rauchwarenhalter fließt.

15. Verfahren gemäß Anspruch 14, ferner umfassend Übertragen von Steuerparameterdaten von einer Computervorrichtung an einen Datentransceiver (80) in dem elektronischen Aerosolbereitstellungssystem, dem Rauchwarenhalter oder der Aromaabgabevorrichtung und Steuern der Abgabe von elektrischer Energie an das Heizelement unter Verwendung eines Computerprozessors in dem elektronischen Aerosolbereitstellungssystem, dem Rauchwarenhalter oder der Aromaabgabevorrichtung, unter den Steuerparameterdaten entsprechender Ausführung des Computercodes.

## Revendications

1. Dispositif de distribution d'arôme (25) destiné à ajouter un arôme à un flux d'aérosol généré par un article à fumer (10 ; 104), le dispositif comprenant :
un élément chauffant électrique (64) configuré pour une connexion à une source d'alimentation électrique (54) ; un organe de soutien (60) dans ou sur lequel l'élément chauffant est soutenu, l'organe de soutien soutenant également des contacts électriques (62) configurés pour connecter l'élément chauffant à une source d'alimentation électrique (54) logée dans un système de fourniture d'aérosol électronique (10) ou un support d'article à fumer (100) ; et
une portion (66) d'apport d'aromatisant disposée sous forme de couche sur une surface de l'organe de soutien et agencée pour recevoir de la chaleur provenant de l'élément chauffant, l'apport d'aromatisant comprenant une matière aromatisante supportée dans une matière de substrat, la matière aromatisante étant apte à former une vapeur et la matière de substrat étant ramollissable sous l'application de chaleur, dans lequel la fourniture d'alimentation électrique à l'élément chauffant distribue de la chaleur à l'apport d'aromatisant pour ramollir au moins une partie de la matière de substrat et libérer au moins une partie de la matière aromatisante sous forme de vapeur (F).

2. Dispositif de distribution d'arôme selon la revendication 1, dans lequel l'article à fumer est un article à fumer combustible (104) et le dispositif de distribution d'arôme est configuré pour être fourni dans un support (100) destiné à l'article à fumer combustible, le support comprenant la source d'alimentation électrique.

3. Dispositif de distribution d'arôme selon la revendication 1, dans lequel l'article à fumer est un système de fourniture d'aérosol électronique (10) comprenant la source d'alimentation électrique, et le dispositif de distribution d'arôme est configuré pour être fourni dans le système de fourniture d'aérosol électronique.

4. Dispositif de distribution d'arôme selon l'une quelconque des revendications précédentes, comprenant en outre une ou plusieurs portions supplémentaires (66a, 66b) d'apport d'aromatisant.

5. Dispositif de distribution d'arôme selon la revendication 4, dans lequel une ou plusieurs portions d'apport d'aromatisant sont agencées sur chacune de surfaces opposées de l'organe de soutien.

6. Dispositif de distribution d'arôme selon l'une quelconque des revendications précédentes, comprenant en outre un ou plusieurs éléments chauffants supplémentaires (64a, 64b) configurés pour être individuellement alimentés en électricité.

7. Dispositif de distribution d'arôme selon la revendication 6, comprenant une portion séparée de matière aromatisante agencée pour recevoir de la chaleur provenant de chaque élément chauffant.

8. Système de fourniture d'aérosol électronique (10), composant (30) d'un système de fourniture d'aérosol électronique ou support d'article à fumer (100) comprenant une douille (72 ; 103) destinée à recevoir un dispositif de distribution d'arôme (25) selon l'une quelconque des revendications 1 à 7 dans une position qui fait connexion électrique avec une source d'alimentation électrique (54) dans le système de fourniture d'aérosol électronique ou un support d'article à fumer et à partir duquel une matière aromatisante libérée par le dispositif de distribution d'arôme est apte à entrer dans un chemin d'écoulement d'air pour un flux d'aérosol à travers le système de fourniture d'aérosol électronique ou le support d'article à fumer.

9. Système de fourniture d'aérosol électronique, composant d'un système de fourniture d'aérosol électronique ou support d'article à fumer selon la revendication 8, dans lequel la douille est configurée pour permettre à un utilisateur d'enlever et de remplacer le dispositif de distribution d'arôme.

10. Système de fourniture d'aérosol électronique, composant d'un système de fourniture d'aérosol électronique ou support d'article à fumer selon la revendication 8 ou la revendication 9, et comprenant un processeur d'ordinateur (78) configuré pour exécuter un code d'ordinateur stocké dans une mémoire (79) pour commander la fourniture d'électricité à l'élément chauffant depuis la source d'alimentation électrique.

11. Système de fourniture d'aérosol électronique, composant d'un système de fourniture d'aérosol électronique ou support d'article à fumer selon la revendication 10, comprenant en outre un émetteur-récepteur de données (80) configuré pour recevoir un code d'ordinateur mis à jour pour stockage dans la mémoire.

12. Dispositif de distribution d'arôme selon l'une quelconque des revendications 1 à 7, et comprenant en outre un processeur d'ordinateur (78) configuré pour exécuter un code d'ordinateur stocké dans une mémoire (79) pour commander la fourniture d'électricité à l'élément chauffant, et un émetteur-récepteur de données (80) configuré pour recevoir un code d'ordinateur mis à jour pour stockage dans la mémoire.

13. Dispositif de stockage stockant un code d'ordinateur exécutable par un processeur d'ordinateur et opérationnel pour amener un dispositif informatique à :
afficher une interface utilisateur qui invite un utilisateur à entrer des paramètres de commande relatifs à l'addition d'arôme depuis un dispositif de distribution d'arôme (25) selon l'une quelconque des revendications 1 à 7 ou 12 à un flux d'aérosol généré par un système de fourniture d'aérosol électronique (10) ou un article à fumer combustible (104) ; et
transmettre des données représentant les paramètres de commande à un émetteur-récepteur de données (80) dans un système de fourniture d'aérosol électronique (10), un composant (30) d'un système de fourniture d'aérosol électronique, un support d'article à fumer (100) ou un dispositif de distribution d'arôme (25).

14. Procédé d'ajout d'arôme à un flux d'aérosol généré par un article à fumer (10, 104), le procédé comprenant :
l'agencement au sein d'un système de fourniture d'aérosol électronique (10) ou d'un support d'article à fumer (100) d'un dispositif de distribution d'arôme (25) comprenant un élément chauffant électrique (64), un organe de soutien (60) dans ou sur lequel l'élément chauffant est soutenu, l'organe de soutien soutenant également des contacts électriques (62) configurés pour connecter l'élément chauffant à une source d'alimentation électrique (54) logée dans un système de fourniture d'aérosol électronique ou un support d'article à fumer, et une portion (66) d'apport d'aromatisant agencée pour recevoir de la chaleur provenant de l'élément chauffant, l'apport d'aromatisant comprenant une matière aromatisante supportée dans une matière de substrat, la matière aromatisante étant apte à former une vapeur (F) et la matière de substrat étant ramollissable sous l'application de chaleur ;
la fourniture d'électricité à l'élément chauffant depuis la source d'alimentation électrique dans le système de fourniture d'aérosol électronique ou le support d'article à fumer pendant qu'un utilisateur inhale par le biais du système de fourniture d'aérosol électronique ou du support d'article à fumer, moyennant quoi la fourniture d'électricité distribue de la chaleur à l'apport d'aromatisant pour ramollir au moins une partie de la matière de substrat et libérer au moins une partie de la matière aromatisante sous forme de vapeur (F) ; et
la distribution de la vapeur libérée dans un flux d'aérosol (A) s'écoulant dans un passage d'écoulement d'air à travers le système de fourniture d'aérosol électronique ou le support d'article à fumer.

15. Procédé selon la revendication 14, comprenant en outre la transmission de données de paramètres de commande depuis un dispositif informatique à un émetteur-récepteur de données (80) dans le système de fourniture d'aérosol électronique, le support d'article à fumer ou le dispositif de distribution d'arôme, et la commande de la fourniture d'électricité à l'élément chauffant à l'aide d'un processeur d'ordinateur dans le système de fourniture d'aérosol électronique, le support d'article à fumer ou le dispositif de distribution d'arôme exécutant un code d'ordinateur en conformité avec les données de paramètres de commande.
